# EUROPÄISCHE PATENTANMELDUNG

(11) **EP 0 693 400 A2**
(43) Veröffentlichungstag der Anmeldung: **24.01.1996**
(21) Anmeldenummer: 95111228.3
(22) Anmeldetag: 18.07.1995
(51) Int. Cl.: B60R 1/06, H05B 3/84

(54) **Aussenspiegel für Kraftfahrzeuge**

(30) Priorität: 23.07.1994 DE 4426188
(71) Anmelder: MEKRA Rangau Plastics GmbH & Co KG, D-90765 Fürth (DE)
(72) Erfinder: Lang, Heinrich, D-91465 Ergersheim (DE); Felbinger, Willi, D-91478 Markt Nordheim (DE)
(74) Vertreter: Hübner, Gerd, Dipl.-Phys.

(57) **Zusammenfassung**

Ein Außenspiegel für Kraftfahrzeuge weist ein Gehäuse (1), eine am Gehäuse (1) angeordnete Spiegeltragplatte (3.0), eine auf der Spiegeltragplatte (3.0) befestigte Spiegelscheibe (7) und eine der Spiegelscheibe (7) zugeordnete elektrische Spiegelheizung auf.

Die Spiegeltragplatte (3.0) ist zumindest in einem Teilbereich aus elektrisch leitfähigem Kunststoffmaterial gebildet, mit dem elektrische Anschlußkontakte verbunden sind, wobei bei Stromfluß durch die Anschlußkontakte und über das elektrisch leitfähige Kunststoffmaterial nach Art einer Widerstandsheizung die Spiegeltragplatte (3.0) und damit die Spiegelscheibe (7) erwärmbar sind.

## Beschreibung

Die Erfindung betrifft einen Außenspiegel für Kraftfahrzeuge, insbesondere für Nutzfahrzeuge wie Lastkraftwagen, mit einem Gehäuse, einer am Gehäuse angeordneten Spiegeltragplatte, einer auf der Spiegeltragplatte befestigten Spiegelscheibe und einer der Spiegelscheibe zugeordneten elektrischen Spiegelheizung.

Derartige Außenspiegel sind weit verbreitet und in vielerlei Ausführungsformen bekannt. So kann die Spiegeltragplatte des Außenspiegels direkt am Gehäuse befestigt sein, das wiederum über einen Verstellmechanismus schwenkbar an einem zum Fahrzeug führenden Halter angebracht ist. Auch gibt es bekannte Spiegel, bei denen die Spiegeltragplatte selbst schwenkbar im feststehenden Gehäuse gelagert ist.

Allen diesen bekannten Ausführungsformen von Spiegeln ist gemeinsam, daß zur Vermeidung eines Beschlagens oder Vereisens der Spiegelscheibe die besagte Spiegelheizung vorgesehen ist. Diese besteht in der Regel aus einer Heizfolie, die zwischen Spiegelscheibe und Spiegeltragplatte eingesetzt ist. Die Heizfolie weist aufgedruckte metallische Leiterbahnen auf, die mit entsprechenden Anschlußkontakten zur Verkabelung versehen sind. Bei Stromfluß durch die Leiterbahnen erwärmen sich diese und sorgen für eine Beheizung der Spiegelscheibe.

Die bekannten Spiegelheizungen weisen verschiedene Nachteile auf. So sind die Heizfolien relativ aufwendig herzustellen und damit kostenintensiv. Auch bedarf ihr Einbau in den Außenspiegel eines gesonderten Montageschrittes. Weiterhin sind die Heizfolien empfindlich gegen Kurzschlußbildung durch in den Zwischenraum zwischen Spiegeltragplatte und Spiegelscheibe eindringende Feuchtigkeit. Auch können die in der Regel auf die Folie aufgedruckten Leiterbahnen durch Kratzer relativ leicht unterbrochen werden, wodurch die Spiegelheizung ausfällt.

Ausgehend von den geschilderten Problemen der bekannten Spiegelheizungen liegt der Erfindung die Aufgabe zugrunde, einen Außenspiegel der eingangs genannten Art so zu verbessern, daß er eine konstruktiv besonders einfach aufgebaute, dabei jedoch montagetechnisch günstige und zuverlässige Spiegelheizung aufweist.

Diese Aufgabe wird dadurch gelöst, daß die Spiegeltragplatte selbst zumindest in einem Teilbereich aus elektrisch leitfähigem Kunststoffmaterial gebildet ist, mit dem elektrische Anschlußkontakte verbunden sind, wobei bei Stromfluß durch die Anschlußkontakte und über das elektrisch leitfähige Kunststoffmaterial nach Art einer Widerstandsheizung die Spiegeltragplatte und damit die Spiegelscheibe erwärmbar sind.

Der Anmeldungsgenstand stellt damit ein vom bekannten Stand der Technik völlig abweichendes Konstruktionsprinzip dar, da die Spiegeltragplatte selbst als Heizelement fungiert. Die Spiegeltragplatte erfüllt also eine ausgesprochene Doppelfunktion, da sie neben der erörterten Heizfunktion auch die übliche Halterungsfunktion für die Spiegelscheibe übernimmt.

Gemäß bevorzugten Ausführungsformen des Erfindungsgegenstandes kann die gesamte Spiegeltragplatte aus elektrisch leitfähigem Kunststoffmaterial bestehen oder diese schichtweise aufgebaut sein. Dabei besteht vorzugsweise eine der Spiegelscheibe zugewandte Schicht aus elektrisch leitfähigem Kunststoffmaterial und eine der Spiegelscheibe abgewandte Schicht aus elektrisch isolierendem Kunststoffmaterial. Beide Schichten können in einem herkömmlichen Zwei-Komponenten-Spritzverfahren gleichzeitig in einer Form ausgebildet werden.

Ebenso kann die Spiegeltragplatte gemäß einer bevorzugten Ausführungsform nur in einem Zentralbereich aus elektrisch leitfähigem Kunststoffmaterial bestehen, so daß in einem umlaufenden Randbereich nicht-leitfähige Zonen vorhanden sind. Diese Zonen können mit der vorher erwähnten rückseitigen Isolierschicht kombiniert werden.

Durch die vorstehenden Alternativen für die Anordnung von elektrisch leitfähigem Kunststoffmaterial kann die Heizcharakteristik der Spiegelheizung an die jeweils bei einem Spiegel gegebenen Bedingungen angepaßt werden. Insbesondere kann der aus nicht-leitfähigem Kunststoffmaterial bestehende Randbereich oder die entsprechende rückseitige Schicht als zusätzliche Wärmeisolierung dienen.

Gemäß einer besonders bevorzugten Ausführungsform der Erfindung besteht die Spiegeltragplatte aus einer Kernschicht aus elektrisch leitfähigem Kunststoffmaterial und einer die Kernschicht allseitig umgebenden Hüllschicht aus elektrisch isolierendem Kunststoffmaterial. Durch die allseitige Isolierung der Spiegeltragplatte werden galvanische Effekte vermieden, wie sie beim Eindringen von Feuchtigkeit zwischen der Spiegeltragplatte und dem Spiegelglas auftreten können. Derartige galvanische Effekte würden bei einer fehlenden Isolierung zwischen dem leitfähigen Kunststoffmaterial und der Spiegelscheibe zu einer elektrochemischen Zerstörung der metallischen Spiegelschicht der Spiegelscheibe führen.

In bevorzugter Weise werden die Kernschicht und die Hüllschicht gemeinsam in einer Spritzgußform in einem sogenannten Monosandwich-Spritzgußverfahren hergestellt. Dabei wird das Material der isolierenden Hüllschicht zuerst in die Form eingespritzt. Mit einer kurzen zeitlichen Verzögerung wird das elektrisch leitfähige Material der Kernschicht nachgespritzt, das innerhalb der Hüllschicht eine Seele in der Spiegeltragplatte bildet.

Gemäß weiteren bevorzugten Ausführungsformen der Erfindung kann die Spiegeltragplatte Querschnittsverstärkungen aufweisen. Es kann sich dabei um rippenförmige Querschnittsverstärkungen handeln. Gemäß einer alternativen Ausführungsform dazu weist die Spiegeltragplatte als Querschnittsverstärkung eine von ihren Rändern zum Zentrum hin kontinuierlich anwachsende Querschnittsdicke auf.

Diese Querschnittsverstärkungen sorgen für einen besseren Materialfluß beim Einspritzen des Materials der Spiegeltragplatte, der insbesondere bei dem elektrisch leitfähigen Kunststoffmaterial einer Entmischung des Basismaterials und der elektrisch leitfähigen Partikel entgegenwirkt. Darüber hinaus kann durch die Querschnittsverstärkungen der Stromfluß durch die elektrisch leitfähige Schicht hinsichtlich einer bestimmten gewünschten Heizcharakteristik positiv beeinflußt werden.

Grundsätzlich sind für die elektrischen Anschlußkontakte vielerlei Ausführungsformen möglich. Bevorzugtermaßen sind sie jedoch als streifenförmige, in das elektrisch leitfähige Kunststoffmaterial eingebettete Anschlußelektroden ausgebildet, wobei unterschiedlichste Formen und Anzahlen von Anschlußelektroden vorgesehen sein können. Diese Formgebungen und Anzahlen richten sich wiederum nach der gewünschten Heizcharakteristik, die in erster Linie von den Gegebenheiten bei jedem individuellen Spiegeltyp abhängt.

In einer zwar besonders einfachen, aber trotzdem praxistauglichen Ausführungsform sind zwei stegförmige Anschlußelektroden jeweils vor den schmalseitigen Rändern einer Spiegeltragplatte mit in der Regel rechteckiger Grundform angeordnet, wobei weiterhin die Anschlußelektroden mit aus dem elektrisch leitfähigen Kunststoffmaterial nach außen tretenden Anschlußfahnen versehen sind. Bei dieser Ausgestaltung bildet sich durch das elektrische Feld zwischen den Elektroden ein über den größten Teil der Spiegeltragplatte homogener Stromfluß aus, der für eine gleichmäßige Erwärmung der Spiegelscheibe sorgt. Auf die vorgesehenen Anschlußfahnen können Kabelschuhe in einfacher Weise aufgeklemmt oder aufgerastet werden, was einer üblichen Verbindungstechnik beim Anschließen von elektrischen Systemen im Automobilbau entspricht.

Gemäß einer bevorzugten Ausgestaltung der Erfindung können die vorstehend erörterten, vor den Schmalseiten der Spiegeltragplatte angeordneten Anschlußelektroden mit Massepotential verbunden sein. Eine dritte Anschlußelektrode, die steg- oder scheibenförmig ausgebildet sein kann, ist dann etwa mittig zwischen den beiden vorgenannten Anschlußelektroden angeordnet. Diese dritte Anschlußelektrode ist mit der Heizungs-Betriebsspannung verbunden. Durch diese Ausgestaltung wird der Stromfluß durch die elektrisch leitfähige Schicht der Spiegeltragplatte so beeinflußt, daß die Erwärmung der Spiegelscheibe vom Zentrum her erfolgt.

Für das elektrisch leitfähige Kunststoffmaterial der Spiegeltragplatte sind solche Materialien besonders geeignet, die nicht nur die gewünschten elektrischen Eigenschaften zur Bildung einer Spiegelheizung aufweisen, sondern auch in der bei der Spiegelherstellung üblichen Spritzgußtechnik verarbeitbar sind. Als besonders geeignet haben sich elektrisch leitfähige Kunststoffmaterialien auf der Basis von Polycarbonat-, Polypropylen- und/oder ABS-Kunststoffen herausgestellt, in die elektrisch leitfähige Partikel, wie Stahlspäne, Graphitteilchen, Kohlenstoffasern oder Leitfähigkeitsruß eingebettet sind. Derartige Kunststoffmaterialien sind handelsüblich und in verschiedensten Qualitäten problemlos erhältlich.

Weitere Merkmale, Einzelheiten und Vorteile der Erfindung sind der nachfolgenden Beschreibung entnehmbar, in der Ausführungsbeispiele des Erfindungsgegenstandes anhand der beigefügten Zeichnungen näher erläutert werden. Es zeigen:
- Fig. 1: eine Seitenansicht eines Lkw-Außenspiegels,
- Fig. 2: eine Seitenansicht einer Spiegeltragplatte mit Spiegelscheibe des Spiegels gemäß Fig. 1,
- Fig. 3: eine Ansicht der Spiegeltragplatte aus Pfeilrichtung III gemäß Fig. 2,
- Fig. 4: einen Schnitt entlang der Geraden IV-IV nach Fig. 3,
- Fig. 5: einen geteilten Schnitt analog Fig. 4 durch zwei weitere Ausführungsformen eines Außenspiegels,
- Fig. 6 bis 8: teilweise Schnitte von Spiegeltragplatten entlang der Geraden VI-VI nach Fig. 3 mit unterschiedlichen Ausgestaltungen der Spiegeltragplatte und
- Fig. 9: eine Ansicht einer Spiegeltragplatte analog Fig. 3 mit unterschiedlichen Ausgestaltungen der Anschlußelektroden.

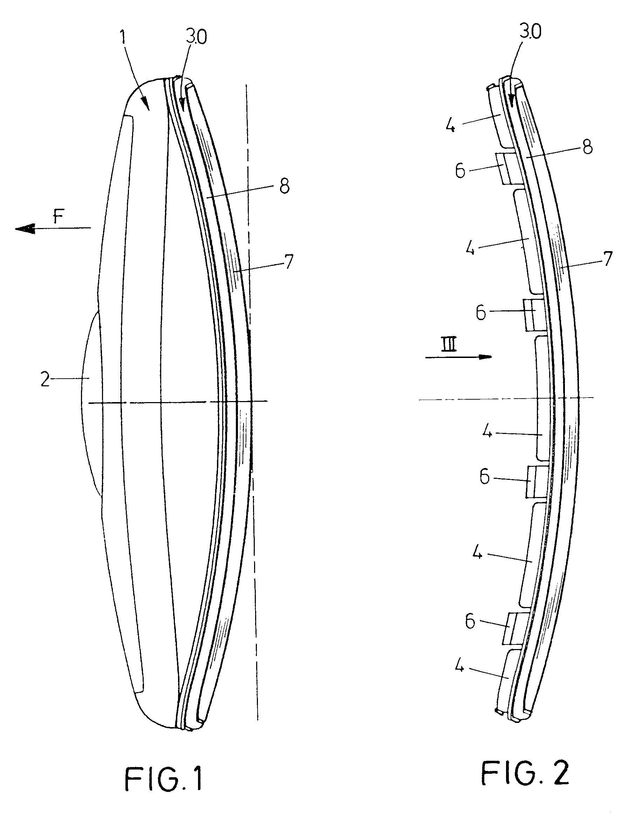

Wie aus Fig. 1 ersichtlich ist, weist der gezeigte Außenspiegel ein schalenförmiges Gehäuse 1 auf, das über ein nicht näher dargestelltes, übliches Schwenkgelenk verstellbar an einem Halter 2 befestigt ist. Mittels des Halters 2 ist der Lkw-Außenspiegel an der Karosserie eines Lkw zu befestigen.

In der entgegen der Fahrtrichtung F weisenden Öffnung des Gehäuses 1 sitzt eine Spiegeltragplatte 3.0, die mit Anlagestegen 4 auf ihrer Rückseite 5 in die Gehäuseöffnung eingreift und dort mittels der zwischen den Anlagestegen 4 angeordneten Rastarme 6 in entsprechenden (nicht dargestellten) Verrastausnehmungen im Gehäuse 1 festgelegt ist.

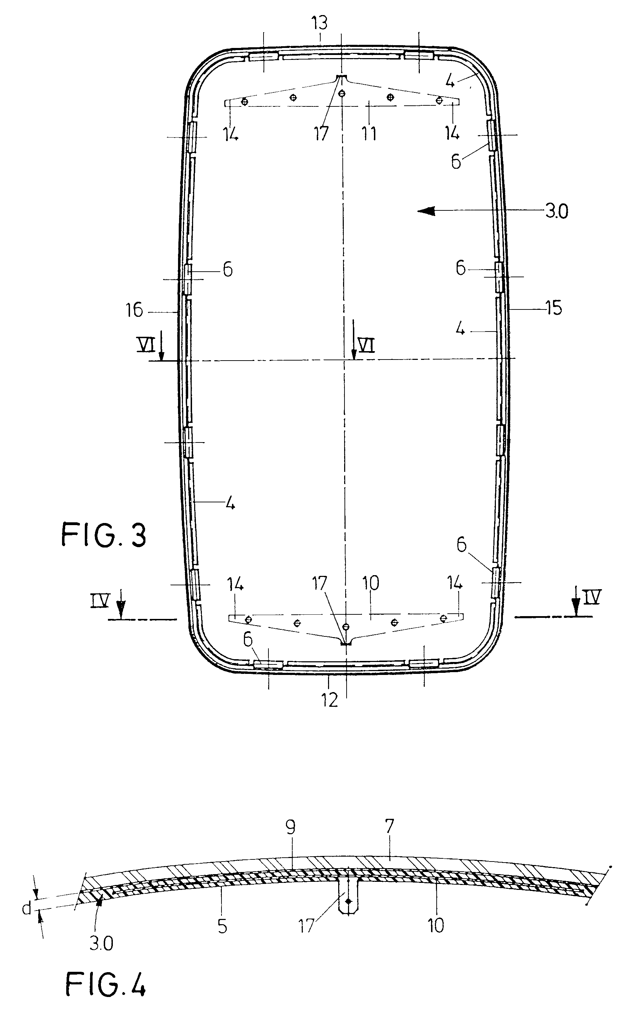

Die Spiegeltragplatte 3.0 weist eine im wesentlichen rechteckige Grundform auf (Fig. 3), wobei die Platte entsprechend der Krümmung der Spiegelscheibe 7 konvex gewölbt ist. Ein an der Spiegeltragplatte 3.0 randseitig umlaufender Steg 8 umgibt den Seitenrand der Spiegelscheibe 7 derart, daß diese über ihre Oberfläche frei liegt. Die Spiegelscheibe 7 ist über eine Klebeschicht 9 (Fig. 4) an der Spiegeltragplatte 3.0 dauerhaft befestigt.

Die Spiegeltragplatte 3.0 ist aus einem elektrisch leitfähigem Kunststoff - einem sogenannten elektrisch leitfähigem Compound - gefertigt, der in unterschiedlichen Qualitäten beispielsweise von der Firma DSM Deutschland GmbH, 40474 Düsseldorf, DE unter der Handelsbezeichnung "Faradex" vertrieben wird. Es handelt sich dabei um Kunststoffmaterialien auf der Basis von PP-, PC-, ABS- oder PC ABS-Kunststoffen, in die elektrisch leitfähige Partikel in Form von Stahlspänen oder Graphitteilchen eingebettet sind. Diese Kunststoffe weisen einen Durchgangswiderstand (bezogen auf eine Distanz von 3 mm) in der Größenordnung von 0,03 bis 0,5 Ohm x cm (ermittelt mit einer 4-Sonden-Messung) auf. Der Oberflächenwiderstand gemessen nach DIN 53482 beträgt zwischen 10² und 10⁶ Ohm. Die Abschirmungseffektivität - gemessen mit Iso-Prüfmethode ASTM D 4935 - liegt in der Größenordnung zwischen 40 und 65 dB.

Wie aus Fig. 3 und 4 deutlich wird, sind in die elektrisch leitfähige Spiegeltragplatte 3.0 zwei streifenförmige Anschlußelektroden 10, 11 aus Metallblech eingebettet, die jeweils mit einem Abstand von einigen wenigen Zentimetern vor den Schmalseiten 12, 13 der Spiegeltragplatte 3.0 so angeordnet sind, daß die Hauptebene der streifenförmigen Anschlußelektroden 10, 11 etwa mittig bezogen auf die Dicke d der Spiegeltragplatte 3.0 liegt. Deren Enden 14 weisen einen Abstand von einigen wenigen Zentimetern zu den Breitseiten 15, 16 der Spiegeltragplatte 3.0 auf. Weiterhin sind die Anschlußelektroden 10, 11 jeweils mit einer Anschlußfahne 17 versehen, die jeweils zur Rückseite 5 der Spiegeltragplatte 3.0 hin nach außen tritt. Auf die Anschlußfahnen 17 sind übliche Kabelschuhe für elektrische Anschlußkabel aufschiebbar.

Wird die eine Anschlußelektrode 10 auf Masse gelegt und die zweite Anschlußelektrode 11 mit der üblichen Bordnetzspannung bei Lastkraftwagen von 24 Volt versorgt, bildet sich zwischen den beiden Anschlußelektroden 10, 11 ein elektrisches Feld aus, das für einen Stromfluß zwischen den beiden Anschlußelektroden 10, 11 über die Spiegeltragplatte 3.0 sorgt. Aufgrund des elektrischen Widerstandes des elektrisch leitfähigen Kunststoffmaterials der Spiegeltragplatte 3.0 erwärmt sich diese, wodurch die Spiegelscheibe 7 beheizt wird. Dabei ist festzuhalten, daß die Spiegeltragplatte 3.0 so ausgelegt sein sollte, daß eine übliche Heizleistung von 15 bis 45 Watt erreicht wird.

Im übrigen ist darauf hinzuweisen, daß bei Verwendung eines elektrisch leitfähigen Kunststoffmaterials, dessen temperaturabhängiges Widerstandsverhalten einen positiven Temperaturkoeffizienten zeigt, eine selbstregelnde Spiegelheizung geschaffen werden kann. Aufgrund des positiven Temperaturkoeffizienten steigt nämlich der Widerstand des Kunststoffmaterials mit steigender Temperatur, was wiederum dazu führt, daß die Heizleistung abnimmt - und umgekehrt. Insofern kann einer übermäßigen Erhitzung des Spiegels vorgebeugt werden.

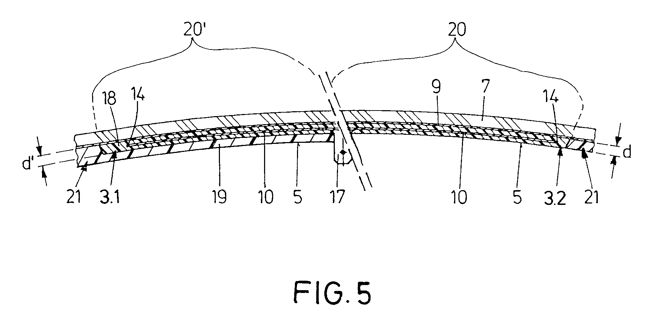

Wie aus Fig. 5, linker Teil deutlich wird, kann die Spiegeltragplatte 3.1 auch aus einer der Spiegelscheibe 7 zugewandten Schicht 18 aus elektrisch leitfähigem Kunststoffmaterial, in die wiederum mittig bezogen auf deren Dicke d' die Anschlußelektroden 10, 11 eingebettet sind, und einer der Spiegelscheibe abgewandten Schicht 19 aus elektrisch isolierendem Kunststoffmaterial bestehen. Bei dieser Ausführungsform wird einer Erwärmung der Rückseite 5 der Spiegeltragplatte 3.1 vorgebeugt.

Bei der in Fig. 5, rechter Teil gezeigten Ausführungsform weist die Spiegeltragplatte 3.2 einen Zentralbereich 20 auf, der aus elektrisch leitfähigem Kunststoffmaterial besteht. Randseitig schließt sich ein Bereich 21 an, der aus elektrisch isolierendem Kunststoffmaterial besteht.

Ein solcher randseitiger Bereich 21 aus elektrisch isolierendem Material schließt sich auch beim Ausführungsbeispiel gemäß Fig. 5, linker Teil an die nur in einem Zentralbereich 20' vorgesehene Schicht 18 an.

Im übrigen ist darauf hinzuweisen, daß die Spiegelscheibe 7 nicht nur über eine Klebeschicht 9, sondern auch über ein Doppelklebeband oder mittels einer Verrastung mit der Spiegeltragplatte 3.0, 3.1, 3.2 zu verbinden ist.

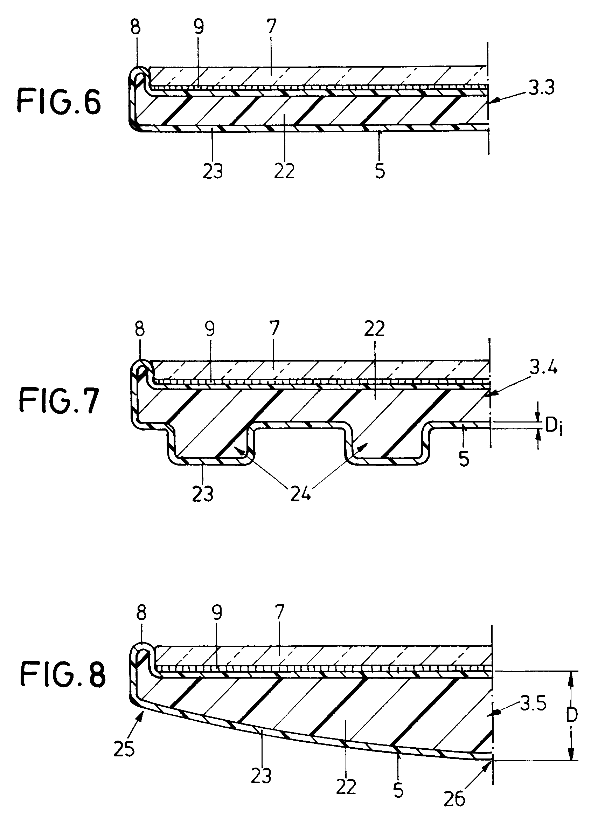

In den Fig. 6 bis 8 sind weitere alternative Ausführungsformen für Spiegeltragplatten 3.3, 3.4 bzw. 3.5 dargestellt. Diesen Ausführungsformen ist gemeinsam, daß eine Kernschicht 22 aus elektrisch leitfähigem Kunststoffmaterial vorgesehen ist, die von einer Hüllschicht 23 aus elektrisch isolierendem Kunststoffmaterial allseitig umgeben ist. Hüllschicht 23 und Kernschicht 22 werden in einem Monosandwich-Spritzgußverfahren in einer gemeinsamen Spritzgußform hergestellt, wobei das die Kernschicht 22 bildende Isoliermaterial mit einer zeitlichen Verzögerung in der Größenordnung von etwa einer halben Sekunde nach dem die Hüllschicht 23 bildenden Material in die Form eingespritzt wird. Dadurch bildet sich auf der Außenseite der Spiegeltragplatte 3.3, 3.4 und 3.5 die isolierende Hüllschicht 23 aus, die für eine Rundum-Isolation der Spiegeltragplatte 3.3, 3.4 und 3.5 sorgt.

In Fig. 6 ist eine Spiegeltragplatte 3.3 gezeigt, deren Querschnittsdicke über die Fläche der Spiegeltragplatte 3.3 konstant ist.

In Fig. 7 ist die Spiegeltragplatte 3.4 so ausgestaltet, daß sie Querschnittsverstärkungen in Form von Rippen 24 aufweist. Diese Rippen laufen parallel zu den Breitseiten 15, 16 der Spiegeltragplatte 3.4.

Bei der in Fig. 8 gezeigten Ausführungsform weist die Spiegeltragplatte 3.5 als Querschnittsverstärkung eine von ihren Rändern 25 zum Zentrum 26 hin kontinuierlich anwachsende Querschnittsdicke D auf, wodurch die Rückseite der Spiegeltragplatte 3.5 konvex gewölbt ausgebildet ist.

Die weiteren Konstruktionsmerkmale der Spiegeltragplatte 3.3, 3.4 und 3.5 gemäß den Fig. 6 bis 8 entsprechen den Merkmalen, wie sie in den Fig. 1 bis 4 gezeigt sind. Übereinstimmende Konstruktionsmerkmale sind daher mit identischen Bezugszeichen versehen und benötigen keiner nochmaligen Beschreibung.

Im übrigen ist darauf hinzuweisen, daß die Querschnittsverstärkungen bei den Ausführungsformen gemäß Fig. 7 und 8 durch eine entsprechende Verstärkung der Kernschicht 22 erzielt werden. Die Hüllschicht 23 weist eine konstante Dicke Dᵢ auf.

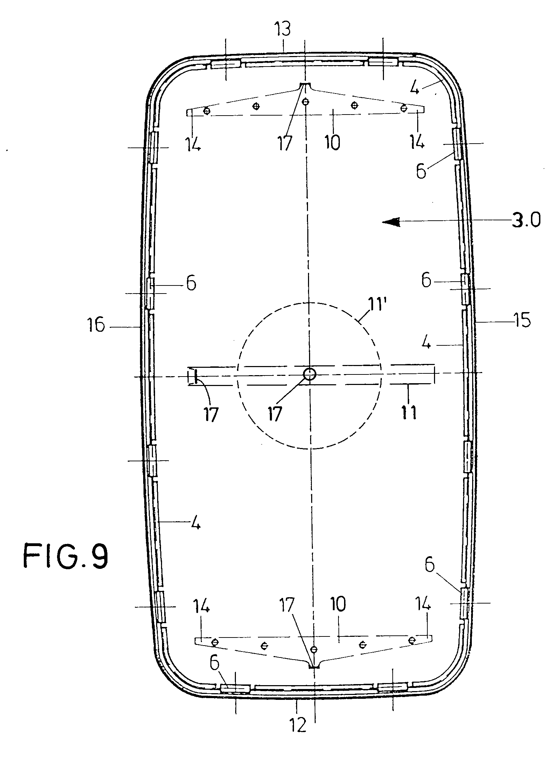

In Fig. 9 ist eine alternative Ausführungsform der Spiegeltragplatte 3.0 gezeigt, in der von Fig. 3 abweichende Anschlußelektroden verwendet werden. So liegen die beiden jeweils vor den Schmalseiten 12, 13 der Spiegeltragplatte 3.0 angeordneten Anschlußelektroden 10 auf Massepotential. Ferner ist eine dritte Anschlußelektrode 11 etwa mittig zwischen den beiden vorgenannten Anschlußelektroden 10 angeordnet, die mit der Heizungs-Betriebsspannung verbunden ist. Wie in Fig. 9 lang-strichliert dargestellt ist, kann die dritte Anschlußelektrode stegförmig ausgebildet sein. Kurz-strichliert ist alternativ dazu eine scheibenförmige Anschlußelektrode 11' angedeutet. Durch diese Anordnung der Anschlußelektroden 10 und 11 bzw. 11' erfolgt eine Einleitung des Heizstromes über das Zentrum 26 der Spiegeltragplatte 3.0, der von dort ausgehend symmetrisch zu den beiden randseitigen Anschlußelektroden 10 fließt.

Im übrigen sind in Fig. 9 alle mit der Ausführungsform gemäß Fig. 3 übereinstimmenden Konstruktionsteile mit identischen Bezugszeichen versehen und bedürfen keiner näheren Erörterung. Weiterhin ist zu ergänzen, daß die in den Fig. 9 dargestellte Anschlußkonfiguration auch bei den Spiegeltragplatten 3.1, 3.2, 3.3, 3.4 und 3.5 einsetzbar ist.

## Patentansprüche

1. Außenspiegel für Kraftfahrzeuge, insbesondere für Nutzfahrzeuge, mit einem Gehäuse (1), einer am Gehäuse (1) angeordneten Spiegeltragplatte (3.0, 3.1, 3.2, 3.3, 3.4, 3.5), einer auf der Spiegeltragplatte (3.0, 3.1, 3.2, 3.3. 3.4, 3.5) befestigten Spiegelscheibe (7) und einer der Spiegelscheibe (7) zugeordneten elektrischen Spiegelheizung, dadurch gekennzeichnet, daß die Spiegeltragplatte (3.0, 3.1, 3.2, 3.3, 3.4, 3.5) zumindest in einem Teilbereich aus einem elektrisch leitfähigem Kunststoffmaterial gebildet ist, mit dem elektrische Anschlußkontakte (Anschlußelektroden 10, 11, 11') verbunden sind, wobei bei Stromfluß durch die Anschlußkontakte (Anschlußelektroden 10, 11, 11') und über das elektrisch leitfähige Kunststoffmaterial der Spiegeltragplatte (3.0, 3.1, 3.2, 3.3, 3.4, 3.5) nach Art einer Widerstandsheizung die Spiegeltragplatte (3.0, 3.1, 3.2, 3.3, 3.4, 3.5) und damit die Spiegelscheibe (7) erwärmbar sind.

2. Außenspiegel nach Anspruch 1, dadurch gekennzeichnet, daß die gesamte Spiegeltragplatte (3.0) aus elektrisch leitfähigem Kunststoffmaterial besteht.

3. Außenspiegel nach Anspruch 1, dadurch gekennzeichnet, daß die Spiegeltragplatte (3.1) aus einer der Spiegelscheibe (7) zugewandten Schicht (18) aus elektrisch leitfähigem Kunststoffmaterial und einer der Spiegelscheibe (7) abgewandten Schicht (19) aus elektrisch isolierendem Kunststoffmaterial besteht.

4. Außenspiegel nach Anspruch 1, dadurch gekennzeichnet, daß die Spiegeltragplatte (3.2) nur in einem Zentralbereich (20) aus elektrisch leitfähigem Kunststoffmaterial besteht.

5. Außenspiegel nach Anspruch 1, dadurch gekennzeichnet, daß die Spiegeltragplatte (3.3, 3.4, 3.5) aus einer Kernschicht (22) aus elektrisch leitfähigem Kunststoffmaterial und einer die Kernschicht (22) allseitig umgebenden Hüllschicht (23) aus elektrisch isolierendem Kunststoffmaterial besteht.

6. Außenspiegel nach Anspruch 5, dadurch gekennzeichnet, daß die Kernschicht (22) und die Hüllschicht (23) gemeinsam in einer Spritzgußform in einem Monosandwich-Spritzgußverfahren hergestellt sind.

7. Außenspiegel nach einem der Ansprüche 1 bis 6, dadurch gekennzeichnet, daß die Spiegeltragplatte (3.4, 3.5) Querschnittsverstärkungen (24) aufweist.

8. Außenspiegel nach Anspruch 7, dadurch gekennzeichnet, daß die Spiegeltragplatte (3.4) rippenförmige Querschnittsverstärkungen (24) aufweist.

9. Außenspiegel nach Anspruch 7, dadurch gekennzeichnet, daß die Spiegeltragplatte (3.5) als Querschnittsverstärkung eine von ihren Rändern (25) zum Zentrum (26) hin kontinuerlich anwachsende Querschnittsdicke (D) aufweist.

10. Außenspiegel nach einem der Ansprüche 1 bis 9, dadurch gekennzeichnet, daß die Anschlußkontakte jeweils als streifenförmige, in das elektrisch leitfähige Kunststoffmaterial der Spiegeltragplatte (3.0, 3.1, 3.2, 3.3, 3.4, 3.5) eingebettete Anschlußelektroden (10, 11, 11') ausgebildet sind.

11. Außenspiegel nach Anspruch 10, dadurch gekennzeichnet, daß die Anschlußelektroden (10, 11, 11') mit aus dem elektrisch leitfähigem Kunststoffmaterial nach außen tretenden Anschlußfahnen (17) versehen sind.

12. Außenspiegel nach Anspruch 10 oder 11, dadurch gekennzeichnet, daß die Spiegeltragplatte (3.0, 3.1, 3.2, 3.3, 3.4, 3.5) eine im wesentlichen rechteckige Grundform aufweist und die beiden Anschlußelektroden (10, 11) jeweils vor den Schmalseiten (12, 13) der Spiegeltragplatte (3.0, 3.1, 3.2) angeordnet sind.

13. Außenspiegel nach Anspruch 12, dadurch gekennzeichnet, daß die beiden jeweils vor den Schmalseiten (12, 13) der Spiegeltragplatte (3.0) angeordneten Anschlußelektroden (10) mit Massepotential verbunden sind und eine dritte Anschlußelektrode (11, 11') etwa mittig zwischen den beiden vorgenannten Anschlußelektroden (10) angeordnet ist, die mit der Heizungs-Betriebsspannung verbunden ist.

14. Außenspiegel nach Anspruch 13, dadurch gekennzeichnet, daß die dritte Anschlußelektrode (11) stegförmig ausgebildet ist.

15. Außenspiegel nach Anspruch 13, dadurch gekennzeichnet, daß die dritte Anschlußelektrode (11') scheibenförmig ausgebildet ist.

16. Außenspiegel nach einem der Ansprüche 1 bis 15, dadurch gekennzeichnet, daß das elektrische leitfähige Kunststoffmaterial aus elektrisch isolierenden Polycarbonat-, Polypropylen- oder ABS-Kunststoffen oder Mischungen daraus besteht, in die elektrisch leitfähige Partikel, insbesondere Stahlspäne, Graphitteilchen oder Kohlenstoffasern, eingebettet sind.
